# EUROPÄISCHE PATENTSCHRIFT

(11) **EP 0 388 618 B1**
(45) Veröffentlichungstag und Bekanntmachung des Hinweises auf die Patenterteilung: **04.10.1995**
(21) Anmeldenummer: 90102419.0
(22) Anmeldetag: 07.02.1990
(51) Int. Cl.: G01S 17/87, B65F 3/04, B65F 3/00

(54) **System zur Bestimmung der Lage eines Objektes im Raum mit Hilfe eines videooptischen Sensors**
System for determining the position of an object in space using a video-optical sensor
Système de détermination de la position dans l'espace d'un objet à l'aide d'un capteur optique à vidéo

(30) Priorität: 23.03.1989 DE 3909762
(43) Veröffentlichungstag der Anmeldung: 26.09.1990
(73) Patentinhaber: EDELHOFF POLYTECHNIK GMBH & CO., D-58640 Iserlohn (DE)
(72) Erfinder: Schulte-Hinsken, Stefanie, Dr., CH-5000 Aarau (CH); Kirchhof, Johannes, D-5860 Iserlohn (DE)
(74) Vertreter: Gossel, Hans K., Dipl.-Ing.

(56) Entgegenhaltungen:
- EP-A- 0 078 011
- EP-A- 0 214 453
- EP-A- 0 254 634
- WO-A-87/02797
- SENSOR AND ACTUATORS,Bd. 17, Nr. 3/4, 17. Mai 1989, Lausanne,CH;Seiten 329 - 338; SCROER et al.: "Optical sensors for position measurements"
- PATENT ABSTRACTS OF JAPAN, Bd. 13, Nr. 050 (P-823)6. Februar 1989;& JP-A-63 243 706

## Beschreibung

Die Erfindung betrifft ein System zum automatischen Aufnehmen bereitgestellter Müllbehälter durch ein Müllsammelfahrzeug nach dem Oberbegriff des Patentanspruchs 1.

Bei einem aus der EP-A-214 453 bekannten System zur Bestimmung der Lage eines Objekts relativ zu einer Handhabungseinrichtung sind mindestens 3 im Abstand voneinander und winkelig zu einer gemeinsamen Bezugsebene angeordnete Ultraschallsensoren vorgesehen, die langgestreckte linienförmige Merkmale erfassen, die die Schallwellen parallel zur Einfallsrichtung reflektieren. Durch Ultraschallsensoren gesteuerte Handhabungseinrichtungen haben nur einen relativ begrenzten Anwendungsbereich, da eine Erfassung des Objekts grundsätzlich nur gewährleistet ist, wenn der Abstand der Ultraschallsensoren zu den Ultraschallreflektoren nicht größer als 500-700 mm ist.

Ein aus EP-A-0 078 011 bekanntes System nach dem Oberbegriff des Patentanspruchs 1 besteht aus einem Müllsammelfahrzeug mit einem teleskopartigen Greifer, der mittels wenigstens einer am Fahrzeug angeordneten Kamera und Rechnereinheit über entsprechende Steuerimpulse so steuerbar ist, daß er selbsttätig am Straßenrand stehende Müllbehälter ergreifen und diese entleeren kann. Dabei kann vorgesehen sein, daß die Müllbehälter und der Greifer mit zusammenwirkenden Sensoren ausgerüstet sind. Bei diesem bekannten System reichen möglicherweise die von der Kamera erfaßbaren Kontraste für eine fehlerfreie Lagebestimmung und Kennung von Müllbehältern nicht aus. Weiterhin erfordert die Lagebestimmung einen hohen Rechenaufwand mit einer entsprechend langen Rechnungszeit.

Videooptische Sensoren sind bisher zur Bestimmung der Lage von Objekten und zur Erzeugung von Handhabungseinrichtungen steuernden Signalen als weniger geeignet angesehen worden, da diese wegen der jeweiligen Beleuchtungsverhältnisse, der Farbkonstraste und der zu erfassenden Merkmale starken Einschränkungen unterliegen und weil diese sehr störungsempfindlich erschienen.

Aus WO-A-87/02 797 ist ein intelligentes, optoelektronisches Andocksystem für die Raumfahrt bekannt. Bei diesem System wird ein erstes Raumfahrzeug aktiv an ein zweites passives Raumfahrzeug heranmanövriert. Hierzu weist das zweite Raumfahrzeug passive optische Hilfsmittel, nämlich drei in einem Dreieck angeordnete retroreflektierende Punkte, sowie eine mit einem bestimmten Muster versehene retroreflektierende Andockplatte auf. Das erste Raumfahrzeug ist mit drei Lasersendereinheiten und drei Empfangseinheiten versehen, so daß das zweite Raumfahrzeug in einem Bereich von mehreren tausend Metern bis zu 20 cm detektierbar ist. Mit Hilfe der durch die Steuereinheiten gewonnen Signale und Recheneinheiten wird das erste Raumfahrzeug zum Andocken an das zweite Raumfahrzeug selbsttätig herangesteuert.

Aufgabe der Erfindung ist es, ein robustes und störungsunempfindliches System nach dem Oberbegriff des Patentanspruchs 1 zu schaffen, das die sichere Erfassung und Lagebestimmung von Objekten im Raum gestattet und der gemessenen Lage des Objekts entsprechende, in einer elektronischen Recheneinheit verarbeitungsfähige Signale erzeugt.

Erfindungsgemäß wird diese Aufgabe durch die kennzeichnenden Merkmale des Patentanspruchs 1 gelöst. Das erfindungsgemäße System gestattet mit großer Sicherheit und über eine ausreichend große Entfernung die Erfassung der durch die retroreflektierenden Marken gekennzeichneten Müllbehälter.

Als Halbleiterkamera wird vorzugsweise ein Flächensensor in Form einer sogenannten CCD-Kamera verwendet, die beispielsweise ein Feld mit 248 lichtempfindlichen Elementen pro Linie und Spalte aufweisen können und daher ein hohes Auflösungsvermögen besitzen. Der aus dem Feld bestehende Flächensensor weist darüber hinaus eine radiometrische Auflösung von 256 Graustufen auf.

Damit ist eine hinreichend genaue sensible Erfassung der retroflektierenden Marken auch aus größerer Entfernung sichergestellt.

Das Prinzip der retroflektierenden Marken besteht darin, daß sie das Licht grundsätzlich in die Richtung zurückwerfen, aus der sie angestrahlt werden. Dies gilt unabhängig von dem Einfallswinkel des Lichtes im Arbeitsbereich der retroflektierenden Marken.

Dabei soll durch einen entsprechenden Aufbau gewährleistet werden, daß die optische Achse der Kamera möglichst nahe an der optischen Achse der Beleuchtung und im Idealfall in der optischen Achse der Beleuchtung liegt, da dann die maximale Lichtintensität von den Retroreflektoren auf die Sensorfläche der Kamera reflektiert wird. Retroreflektierende Marken eignen sich aufgrund ihres guten Kontrastes besonders gut zur automatischen Erkennung von Punkten im Bild.

Der Kontrast zwischen den retroreflektierenden Marken und der Bildumgebung kann durch die Anordnung geeigneter Filter vor der Kamera noch verstärkt werden. Hierzu wird zweckmäßigerweise ein Filter verwendet, das nur bestimmte Frequenzen in einem schmalen Band transmittiert. Dadurch werden durch das Filter von der Umgebung kommende Störeinflüsse reduziert oder eliminiert und eine scharfe Trennung der Marken von ihrer Umgebung erzeugt.

Als Grundlage der Positionsbestimmung werden bestimmte Punkte verwendet, die zweckmäßigerweise durch die Mittelpunkte der vorzugsweise kreisförmigen retroflektierenden Marken gebildet werden. Die Mittelpunkte der im Bild abgebildeten retroreflektierenden Marken werden durch eine übliche Schwerpunktsberechnung bestimmt.

Die Anzahl und die geometrische Anordnung der Marken zueinander werden bei der Auswertung des Bildes berücksichtigt. Zweckmäßigerweise werden insgesamt 5 Marken auf dem Objekt angebracht. Die Anordnung der Marken bestimmt die erreichbare Genauigkeit der Positionsbestimmung des Objekts.

Zur Positionsbestimmung des Objekts wird also nicht das Objekt selbst herangezogen, sondern ein auf diesem künstlich angebrachtes Muster, das aus den retroreflektierenden Marken besteht. Dieses Muster unterscheidet sich aufgrund seiner Eigenschaften und seiner Geometrie von der natürlichen Umgebung, so daß es sicher von der Kamera erfaßt werden kann. Zur Ermittlung der Position der Marken dient die CCD-Kamera, deren Objektwinkel auf den gewünschten Arbeitsbereich der zu steuernden Handhabungseinrichtung abgestimmt ist. Mit der Kamera wird ein Bild des Musters in seiner Umgebung aufgenommen, das die Kamera zur rechnerischen Online-Weiterverarbeitung an das Bildverarbeitungssystem überträgt. Dabei wird die räumliche Lage der Marken in Bezug auf das zu erfassende Objekt als bekannt vorausgesetzt. Mit einer zusätzlichen Beleuchtungseinrichtung werden die retroreflektierenden Marken zur Reflektion angeregt, wobei durch den Meßaufbau gewährleistet ist, daß maximale Reflektionen der angestrahlten Marken auf dem Kamerabild erscheinen.

Zweckmäßigerweise wird das von der Kamera aufgenommene Grauwert-Bild für die weitere Verarbeitung in ein Binär-Bild umgewandelt. Dabei werden die Grauwerte einem Schwellwert gegenübergestellt und in Abhängigkeit davon, ob sie den Schwellwert unterschreiten oder überschreiten, einem (schwarzen) Hintergrund (weißen) Vordergrund zugeordnet. In diesem Fall ist der Schwellwert so zu wählen, daß die hellen Marken den Vordergrund bilden und der verbleibende Teil des Bildes möglichst dem Hintergrund zugeordnet wird. Durch die wechselnden Lichtverhältnisse und die unterschiedliche Umgebung der Objekte ist eine dynamische Anpassung des Schwellwertes zweckmäßig. Die Information über die Wahl des Schwellwertes wird aus dem Grauwert-Histogramm abgeleitet.

Aufgrund der Kontraststeigerung durch ein Filter verursachen die Marken das lokale Maximum mit dem höchsten Grauwert. Dieses Verfahren wird bei der Wahl der Schwelle ausgenutzt. Der auf diese Weise ermittelte Schwellwert wird der Binarisierung zugrunde gelegt.

Die Verarbeitung der erfaßten retroreflektierenden Marken kann aufgrund einer sogenannten Globalszenenanalyse und einer Lokalszenenanalyse erfolgen.

Durch die Globalszenenanalyse erfolgt dabei die Bestimmung der aus dem Bild abgeleiteten Mittelpunktskoordinaten der Marken. Im Rahmen einer Segmentierung des Binärbildes werden die zusammenhängenden weißen Bereiche des Bildes ermittelt. Aus den entstehenden Segmenten werden Eigenschaften wie Schwerpunktskoordinaten, Flächengröße und gegebenenfalls Kantenlänge des umschreibenden Rechteckes abgeleitet.

In Abhängigkeit von den Lichtverhältnissen treten Störsegmente auf. Über entsprechende Auswahlkriterien wird dafür gesorgt, daß die gesuchten Marken von diesen Störsegmenten getrennt werden. Bei diesen Störsegmenten handelt es sich um Bildbereiche, die aufgrund ihrer Grauwerte bei der Binarisierung weißen Bereichen zugeordnet wurden und nicht zugleich die Marken repräsentieren. Die Menge der im Binärbild auftretenden Störsegmente ist abhängig von der Umgebung und den jeweiligen Lichtverhältnissen. Durch Vorinformationen, die sich aus den gesuchten Bildsegmenten ergeben, lassen sich Kriterien ableiten, mit deren Hilfe die retroreflektierenden Marken von den übrigen Segmenten getrennt werden können. Dabei sind Kriterien für die Marken im Bild beispielsweise deren maximale Fläche, deren minimale Fläche, die minimale und maximale Kantenlänge des umschreibenden Rechtecks und die relative Lage der Marken zueinander. Die größtmögliche Fläche einer im Bild abgebildeten Marke ist abhängig von der kürzesten Entfernung zwischen Kamera und Objekt sowie der realen Größe der Marken. Die minimale Fläche ergibt sich aus dem Mindestmaß der angestrebten Erkennungssicherheit. Die Grenzen für die Kanten resultieren aus den möglichen Stellungen des Objekts relativ zur Kamera.

Bei den zweckmäßigerweise vorgesehenen fünf retroreflektierenden Marken dient der mittlere Punkt insbesondere der getrennten Erkennung von zwei nebeneinander stehenden Objekten.

Durch die sogenannte Lokalszenenanalyse wird aufbauend auf dem Ergebnis der sogenannten zuvor beschriebenen Globalszenenanalyse die Position des Objekts bestimmt. Eine räumliche Bestimmung des Objekts mit nur einer Kamera ist erfindungsgemäß möglich, da Vorinformationen vorliegen. Diese Vorinformationen bestehen darin, daß die räumlichen Koordinaten der Marken in Bezug auf ein von dem Objekt abhängiges Koordinatensystem als bekannt vorausgesetzt werden. Aus diesen bekannten räumlichen Objektkoordinaten der Marken läßt sich die Position des Behälters in Bezug auf die Kamera bestimmen.

Werden fünf retroreflektierende Marken vorgesehen, von denen die Marken die Eckpunkte eines Rechtecks bilden und die fünfte Marke auf dem Schnittpunkt der Diagonalen liegt, kann jede in einem Eckpunkt befindliche Marke eine redundante Marke bilden. Zur Erfassung der Objektkoordinaten genügt dann die Erfassung von drei Punkten, die jedoch nicht auf einer Geraden liegen dürfen. Zur Erhöhung der Genauigkeit sollten jedoch mehr als drei Punkte herangezogen werden, so daß durch die weiteren Punkte eine gewisse Überbestimmung erfolgt und eine gegenseitige Kontrolle der Punkte ermöglicht wird.

Zweckmäßigerweise bestehen die Marken aus retroreflektierenden Folien.

In weiterer Ausgestaltung der Erfindung ist vorgesehen, daß die Marken an der Frontseite, zweckmäßgigerweise auf der oberen Manschette, eines mit mindestens einer Aufnahmetasche für eine Greifklaue versehenen Müllbehälters angeordnet sind und daß der Rechner Antriebseinrichtungen der Greifklaue der Hubkippvorrichtung eines Müllwagens steuert. Diese Ausgestaltung des erfindungsgemäßen Systems gestattet es, automatisch bereitgestellte Müllbehälter aufzunehmen und zu verkippen. Die videooptische Erfassung der Behälter erfolgt zweckmäßigerweise über eine auf einer Konsole hinter der Windschutzscheibe des Müllsammelfahrzeugs montierten Halbleiterkamera, die somit witterungsunabhängig und vor Verschmutzung geschützt den seitlichen Bereich ohne wesentliche Entfernungsbeschränkung vor dem Fahrzeug erfassen kann. Die retroreflektierenden Marken werden auch bei hellstem Sonnenschein über einen Scheinwerfer angestrahlt, so daß die retroreflektierenden Marken stets in gleicher Weise von der Kamera erfaßt werden können.

Zweckmäßigerweise ist der Müllsammelwagen im Bereich des Armaturenbretts mit einem Monitor versehen, der das von der Halbleiterkamera aufgenommene Bild wiedergibt, wobei eine Bildauswertung durch den Rechner und eine rechnergesteuerte Steuerung der Greifklaue durch Betätigung eines Aktivierungsschalters erfolgt.

Da das Ankuppeln und Aufnehmen der Behälter durch das erfindungsgemäße System automatisch erfolgt, ist aus Sicherheitsgründen ein den Bewegungsbereich der Greifklaue überwachendes Radargerät vorgesehen, das die Greifklauenbewegung stoppt, wenn dieses eine zusätzliche Bewegung im Überwachungsfeld erfaßt.

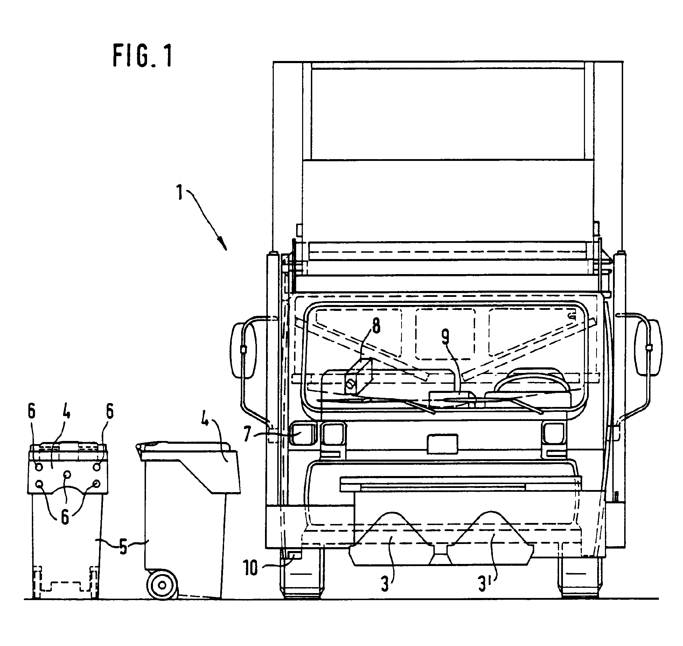

Ein Ausführungsbeispiel der Erfindung wird nachstehend anhand der Zeichnung näher erläutert. In dieser zeigt
- Fig.1: eine Vorderansicht eines Müllsammelfahrzeugs mit einem zur Aufnahme und zum Entleeren bereitgestellten Müllbehälter und einem neben diesem stehenden Müllbehälter mit fünf retroreflektierenden Marken an der oberen Schürze des Behälters,
- Fig.2: eine schematische Darstellung des Strahlenganges zur Erfassung der retroreflektierenden Marken des Müllbehälters durch den Flächensensor der Kamera,
- Fig.3: eine schematische Darstellung der gesteuerten Greifeinrichtungen der Aufnahmeklaue des Müllsammelfahrzeugs und
- Fig.4: ein Blockschaltbild des videooptischen Erfassungssystems mit Sicherheits- und Verarbeitungseinrichtungen.

Das Müllsammelfahrzeug 1 ist in bekannter und daher nicht näher beschriebener Weise an einem ausschwenkbaren Arm 2 mit einem oder zwei etwa dreieckförmigen Aufnahmeklauen 3,3′ versehen, deren Form komplementär zu einer Aufnahmetasche ist, die zwischen einer oberen umlaufenden Schürze 4 und der vorderen Wandung des Müllbehälters 5 gebildet ist. Die etwa dreieckförmige Aufnahmeklaue 3 weist eine etwa ebene Vorderseite und eine sphärisch gewölbte Rückseite auf, so daß eine dreidimensionale Zentrierung des Müllbehälters 5 beim Einfahren der Aufnahmeklaue 3 in die komplementäre Aufnahmetasche erfolgt. Hinter der Windschutzscheibe des Müllsammelfahrzeugs ist eine Halbleiterkamera 8 angeordnet, die den rechten Bereich vor dem Müllsammelfahrzeug erfaßt. Möglichst dicht neben der Kamera 8 ist ein Scheinwerfer 7 angeordnet, der die auf der vorderen Schürze 4 der Müllsammelbehälter 5 angebrachten fünf Folien 6 mit einer retroreflektierenden Beschichtung erfaßt. Vier retroreflektierende Marken 6 bilden die Eckpunkte eines Rechtecks während die fünfte Marke auf dem Schnittpunkt der Diagonalen angeordnet ist.

Weiterhin ist an dem Armaturenbrett ein Monitor 9 angebracht, der dem Fahrer anzeigt, daß die Kamera 8 das Muster aus retroreflektierenden Marken des Müllbehälters erfaßt hat, so daß er die Steuerung der automatischen Aufnahme einschalten und aktivieren kann.

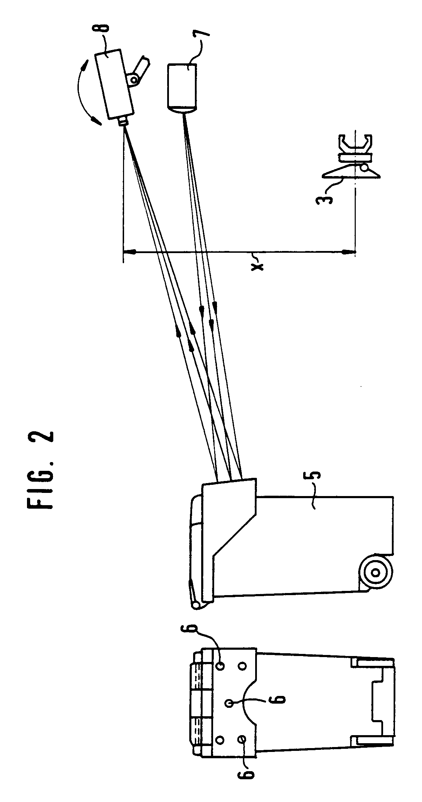

Aus Fig.2 ist ersichtlich, daß der Scheinwerfer 7 die zu erfassenden Marken 6 anstrahlt und die Strahlen zu der Kamera 8 reflektiert werden. In Fig.2 ist aus Gründen der vereinfachten Darstellung allerdings nicht berücksichtigt worden, daß es sich bei den Marken 6 um retroreflektierende Marken handelt, die das Licht unabhängig von dem Einfallswinkel in der Richtung reflektieren, aus der sie angestrahlt werden.

Die Kamera 8 ist mit einer schwenkbaren und verstellbaren Halteeinrichtung versehen, so daß ihr Abstand X zur Grundstellung der Greifklaue 3 eingestellt werden kann.

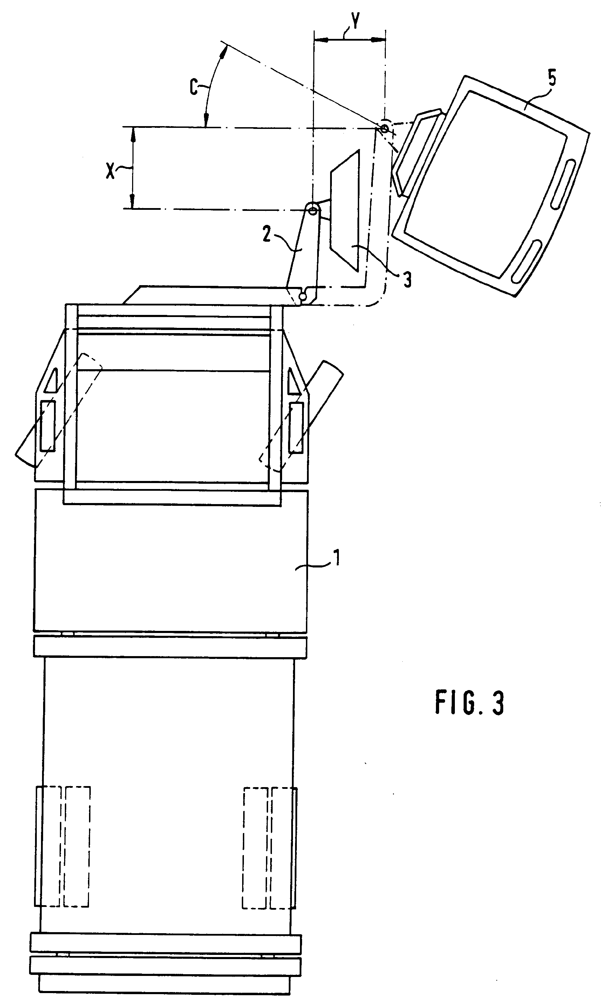

Aus Fig .3 ist ersichtlich, daß die Hubkippvorrichtung des Müllsammelfahrzeugs mit einem schwenkbaren Greifarm 2 versehen ist, der die Greifklaue 3 trägt. Der Greifarm 2 läßt sich in Richtung Y und die Greifklaue 3 in Richtung X durch entsprechende Führungs-, Getriebe- und Antriebsmittel ausfahren. Die Greifklaue 3 läßt sich zusätzlich um ihr Gelenk verschwenken. Weiterhin kann die Greifklaue 3 durch Verschwenken der Hubarme der Hubkippvorrichtung relativ zur Standfläche des Müllbehälters 5 angehoben und abgesenkt werden. Aufgrund ihrer Freiheitsgrade läßt sich die Greifklaue 3 aus ihrer in Fig.3 in vollen Linien dargestellten Stellung in ihre gestrichelt dargestellte Greifposition verfahren.

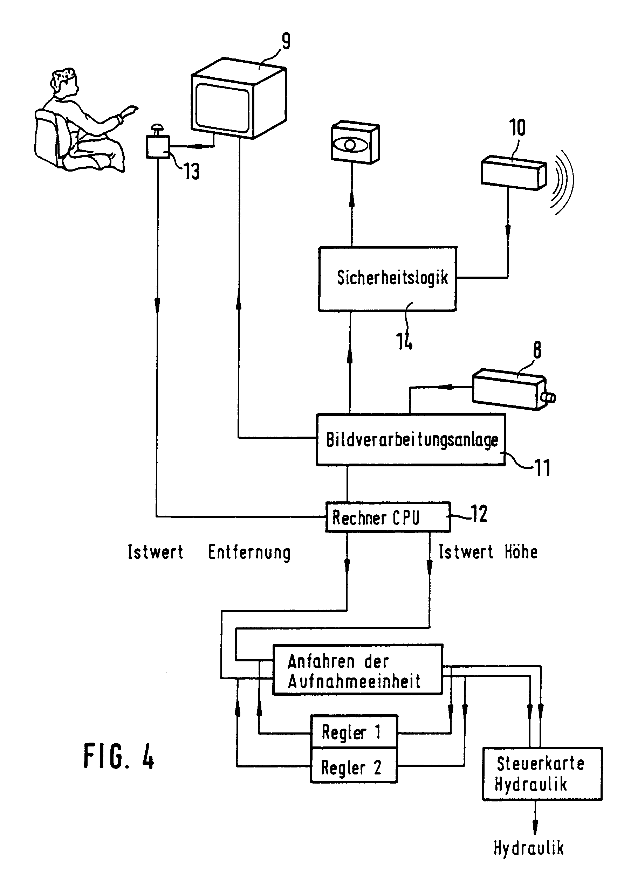

In Fig.4 ist das Erkennungs- und Steuerungssystem schematisch dargestellt. Die Kamera 8 erfaßt das auf der Schürze 4 des Behälters 5 angebrachte Muster der retroreflektierenden Marken 6. Eine elektronische Signalverarbeitungseinrichtung 11 führt Signale sowohl dem elektronischen Rechner 12 als auch dem Monitor 9 zu, so daß der Fahrer erkennen kann, daß die Kamera 8 das Muster der retroreflektierenden Marken erfaßt hat und er durch Betätigung des Schalters 13 die automatische Steuerung einschalten kann. Der Rechner 12 steuert aufgrund der über die Kamera 8 erhaltenen Daten sodann die Steuerhydraulik der Aufnahmeklaue 3, so daß ein automatisches Ankuppeln, Kippen und Absetzen des Behälters erfolgt.

Zusätzlich ist am unteren rechten Bereich des Müllsammelfahrzeugs 1 ein Radargerät 10 angeordnet, das aufgrund einer Sicherheitslogik 14 die Bewegung des Greifers stoppt, wenn zusätzliche Bewegungen im Überwachungsfeld erkannt werden.

## Patentansprüche

1. System zum automatischen Aufnehmen bereitgestellter Müllbehälter (5) durch ein Müllsammelfahrzeug (1), wobei das Müllsammelfahrzeug (1) eine Kamera (8) zur Bestimmung der Lage eines Müllbehälters (5), eine Handhabungseinrichtung für die Müllbehälter (5) und einen Rechner (12) zur Steuerung der Handhabungseinrichtung in Abhängigkeit von Kamerasignalen aufweist,
**dadurch gekennzeichnet,**
daß an jedem Müllbehälter mindestens drei in einem vorbestimmten Muster winkelig zueinander angeordnete, retroreflektierende Marken (6) vorgesehen sind,
daß eine Lichtquelle zur Beleuchtung der Marken (6) vorgesehen ist,
und daß in räumlicher Zuordnung neben der Lichtquelle als Kamera (8) eine Halbleiter-Kamera in Form eines Flächensensors, vorzugsweise eine CCD-Kamera, vorgesehen ist.

2. System nach Anspruch 1, dadurch gekennzeichnet, daß fünf retroreflektierende Marken (6) vorgesehen sind.

3. System nach Anspruch 2, dadurch gekennzeichnet, daß die Marken (6) die Eckpunkte eines Rechteckes bilden und die fünfte Marke (6) auf dem Schnittpunkt der Diagonalen liegt.

4. System nach einem der Ansprüche 1-3, dadurch gekennzeichnet, daß jede in einem Eckpunkt befindliche Marke (6) eine redundante Marke bildet.

5. System nach einem der Ansprüche 1-4, dadurch gekennzeichnet, daß die Marken (6) aus retroreflektierenden Folien bestehen.

6. System nach einem der Ansprüche 1-5, dadurch gekennzeichnet, daß die Marken (6) an der Frontseite eines mit mindestens einer Aufnahmetasche für eine Greifklaue (3) versehenen Müllbehälters (5) angeordnet sind, und daß der Rechner (12) Antriebseinrichtungen einer Hubeinrichtung für die Greifklaue (3) des Müllsammelfahrzeuges (1) steuert.

7. System nach Anspruch 6, dadurch gekennzeichnet, daß das Müllsammelfahrzeug (1) im Bereich des Armaturenbrettes mit einem Monitor (9) versehen ist, der das von der Halbleiterkamera aufgenommene Bild wiedergibt, und daß eine Bildauswertung durch den Rechner (12) und eine rechnergestützte Steuerung der Greifklaue (3) durch Betätigung eines Aktivierungsschalters (13) erfolgt.

8. System nach Anspruch 6 oder 7, dadurch gekennzeichnet, daß ein den Bewegungsbereich der Greifklaue (3) überwachendes Radargerät (10) vorgesehen ist, daß die Greiferbewegung stoppt, wenn dieses eine zusätzliche Bewegung im Überwachungsfeld erfaßt.

9. System nach Anspruch 6 bis 8, dadurch gekennzeichnet, daß die Halbleiterkamera auf einer Konsole hinter der Windschutzscheibe des Müllsammelfahrzeuges (1) befestigt ist.

10. System nach einem der Ansprüche 6 bis 9, dadurch gekennzeichnet, daß die Lichtquelle in Form eines Scheinwerfers (7) in räumlicher Nähe zu der Halbleiterkamera angeordnet ist.

## Claims

1. System for automatically picking up prepared refuse containers (5) by a refuse collection vehicle (1), the refuse collection vehicle (1) having a camera (8) for determining the position of a refuse container (5), a handling device for the refuse containers (5), and a computer (12) for controlling the handling device as a function of camera signals; characterized in that at least three retroreflective discs (6), arranged at angles to one another in a predetermined pattern, are provided on each refuse container: in that a light source is provided for illuminating the discs (6); and in that a semiconductor camera in the form of an area sensor, preferably a CCD camera, is provided as camera (8) in a spatial assignment alongside the light source.

2. System according to Claim 1, characterized in that five retroreflective discs (6) are provided.

3. System according to Claim 2, characterized in that the discs (6) form the corner points of a rectangle and the fifth disc (6) lies on the point of intersection of the diagonals.

4. System according to one of Claims 1-3, characterized in that each disc (6) located at a corner point forms a redundant disc.

5. System according to one of Claims 1-4, characterized in that the discs (6) consist of retroreflective films.

6. System according to one of Claims 1-5, characterized in that the discs (6) are arranged on the front side of a refuse container (5) which is provided with at least one pick-up pocket for a gripper claw (3); and in that the computer (12) controls drive devices of a lifting device for the gripper claw (3) of the refuse collection vehicle (1).

7. System according to Claim 6, characterized in that the refuse collection vehicle (1) is provided, in the area of the dashboard, with a monitor (9) which reproduces the image registered by the semiconductor camera; and in that an image evaluation is carried out by the computer (12) and a computer-aided control of the gripper claw (3) is carried out by actuating an activation switch (13).

8. System according to Claim 6 or 7, characterized in that a radar device (10) is provided, which monitors the area of movement of the gripper claw (3) and which stops the gripper movement if the said radar device (10) registers an additional movement in the monitoring field.

9. System according to Claims 6 to 8, characterized in that the semiconductor camera is fastened to a bracket behind the windscreen of the refuse collection vehicle (1).

10. System according to one of Claims 6 to 9, characterized in that the light source in the form of a floodlight (7) is arranged spatially close to the semiconductor camera.

## Revendications

1. Système pour le ramassage automatique de réservoirs d'ordures (5) mis à disposition par un véhicule de collecte d'ordures (1), le véhicule de collecte d'ordures (1) présentant une caméra (8) pour déterminer la position d'un réservoir d'ordures (5), un dispositif de manipulation des réservoirs d'ordures (5) et un calculateur (12) pour commander le dispositif de manipulation en fonction de signaux d'une caméra, caractérisé en ce que sont prévues à chaque réservoir d'ordures au moins trois marques rétro-réfléchissantes (6) disposées suivant un dessin prédéfini angulairement les unes aux autres, en ce qu'il est prévue une source de lumière pour illuminer les marques (6) et en ce qu'il est prévu suivant une attribution spatiale à côté de la source de lumière, comme caméra (8), une caméra à semi-conducteur sous la forme d'un capteur de surface, de préférence une caméra CCD.

2. Système suivant la revendication 1, caractérisé en ce que cinq marques rétro-réfléchissantes (6) sont prévues.

3. Système selon la revendication 2, caractérisé en ce que les marques (6) forment les points d'angle d'un rectangle et en ce que la cinquième marque (6) se situe au point d'intersection des diagonales.

4. Système selon l'une des revendications 1 à 3, caractérisé en ce que chaque marque (6) se trouvant à un point d'angle constitue une marque redondante.

5. Système selon l'une des revendications 1 à 4, caractérisé en ce que les marques (6) sont constituées de feuilles rétro-réfléchissantes.

6. Système selon l'une des revendications 1 à 5, caractérisé en ce que les marques (6) sont disposées sur le côté frontal d'un réservoir d'ordures (5) pourvu au moins d'une poche de réception pour une griffe de préhension (3), et en ce que le calculateur (12) commande des dispositifs d'entraînement d'un dispositif de levage pour la griffe de préhension (3) du véhicule de collecte d'ordures (1).

7. Système selon la revendication 6, caractérisé en ce que le véhicule de collecte d'ordures (1) est pourvu au voisinage du tableau de bord d'un moniteur (9) qui reproduit l'image prise par la caméra à semi-conducteur, et en ce qu'une exploitation de l'image est exécutée par le calculateur (12) et une commande s'appuyant sur le calculateur de la griffe de préhension (3) par l'actionnement d'un interrupteur d'activation (13).

8. Système selon la revendication 6 ou 7, caractérisé en ce qu'il est prévu un appareil à radar (10) surveillant la zone de déplacement de la griffe de préhension (3) et qui arrête le déplacement de la griffe lorsque celui-ci détecte un déplacement additionnel dans le champs de surveillance.

9. Système selon la revendication 6 à 8, caractérisé en ce que la caméra à semi-conducteur est fixée sur une console derrière le pare-brise du véhicule de ramassage d'ordures (1).

10. Système selon l'une des revendications 6 à 9, caractérisé en ce que la source de lumière sous forme d'un projecteur (7) est disposée au voisinage spatial de la caméra à semi-conducteur.
